# EUROPEAN PATENT SPECIFICATION

(11) **EP 3 349 380 B1**
(45) Date of publication and mention of the grant of the patent: **08.04.2020**
(21) Application number: 18150961.3
(22) Date of filing: 10.01.2018
(51) Int. Cl.: H04L 1/00, H04W 48/12, H04J 11/00, H04W 48/20, H04W 48/16

(54) **IMPROVEMENT OF BROADCAST CHANNEL RECEPTION IN NB-IOT DEVICES**
VERBESSERUNG DES RUNDFUNKKANALEMPFANGS IN NB-IOT-VORRICHTUNGEN
AMÉLIORATION DE LA RÉCEPTION DE CANAUX DE DIFFUSION DANS DES DISPOSITIFS NB-IOT

(30) Priority: 13.01.2017 EP 17151394
(43) Date of publication of application: 18.07.2018
(73) Proprietor: SHENZHEN GOODIX TECHNOLOGY CO., LTD., Shenzhen, Guangdong 518045 (CN)
(72) Inventor: Fließ, Thomas, 01097 Dresden (DE); Venkatesan, Chethan, 01099 Dresden (DE)
(74) Representative: Lippert Stachow Patentanwälte Rechtsanwälte Partnerschaft mbB

(56) References cited:
- US-A1- 2008 316 995
- US-A1- 2012 099 663
- RATASUK RAPEEPAT ET AL: "Overview of narrowband IoT in LTE Rel-13", 2016 IEEE CONFERENCE ON STANDARDS FOR COMMUNICATIONS AND NETWORKING (CSCN), IEEE, 31 October 2016 (2016-10-31), pages 1-7, XP033026826, DOI: 10.1109/CSCN.2016.7785170 [retrieved on 2016-12-15]

## Description

The invention discloses a method for improving reliability of a broadcast channel (NPBCH) reception in narrowband internet-of-things (NB-IoT) devices (UE) during a cell acquisition phase, whereas the UE receives one group of 64 encoded NPBCH subframes in order to attach itself to the cell, whereas the one group of 64 NPBCH subframes comprises a master information block (MIB) comprising cell configuration and cell time information and which has a standardized form of 34 bits (b₀...b₃₃) length and four most significant bits of a system frame number, and whereas the four most significant bits of the system frame number are incremented every 64 NPBCH subframes while the rest of the MIB remains unchanged.

New markets and techniques for e.g. internet-of-things (IoT) are currently developed; new applications like automatic meter reading from the outside of buildings via cellular networks emerge.

On the one hand, such applications demand increase in coverage of the cellular networks. The coverage of a network defines the geographical area where the base stations of a network can communicate with user equipment (UE) devices. The network is distributed over land areas called cells, each served by at least one fixed-location transceiver, but more normally three cell sites or base stations. These base stations provide the cell with the network coverage which can be used for transmission of voice, data and others. A cell typically uses a different set of frequencies or codes from neighboring cells, to avoid or mitigate interference and provide guaranteed service quality within each cell. On the other hand, network operators are not willing to spend too much frequency spectrum as highly valuable resource and device manufacturers want to reduce cost for such IoT devices which are produced in potentially high volumes.

To meet these requirements, narrow-band IoT standard (NB-IoT) is currently being developed as a derivative of the long-term evolution standard (LTE) where the maximum bandwidth is very small compared to other cellular systems. An overview is given in Ratasuk Rapeepat et al. "Overview of narrowband IoT in LTE Rel-13", 2016, DOI: 10.1109/CSCN.2016.7785170.

To achieve high coverage while being constraint by heavy limitations of the system bandwidth, repetition and combining is widely deployed throughout NB-IoT standard. Repetition and combining is a widely-used technique where signals or information are repeated on the transmitter side. This allows the receiver to combine received signals or information to obtain a more reliable result, e.g. during detection of a signal or decoding of information conveyed in a certain channel.

A characteristic of transmissions with repetitions is so-called code-rate, i.e. the ratio of number of information bits per transmission and the number of channel bits being transmitted. Information bits are understood as bits carrying basic information about the cell configuration. Channel bits are understood as bits carrying information in encoded form which are then mapped to a physical channel using a known modulation scheme like QOSK. The lower the code-rate gets the more reliable the transmission becomes. The reason is that the more information is repeated the more likely it becomes that the recipient can correctly receive the information.

In state-of-the-art cellular communication systems, base stations (eNB) of the network broadcast various signals and channels that allow end user devices (UE) to detect the presence of a cell and to obtain basic information about the cell configuration before attaching to this cell, see for example US 2012/0099663 A1.

In NB-IoT standard, presence of the cell as well as first cell parameters are signaled in NB primary synchronization channel (NPSS) and secondary synchronization channel (NSSS). Both channels possess known lengths and fixed, rather short transmission periodicity. The NPSS is used by the devices to achieve synchronization, in both time and frequency, to an NB-IoT cell.

In a first step, the UE acquires these channels (NPSS and NSSS) to synchronize to the cell. Both channels are designed such that received signals from individual transmissions can be combined over an arbitrary number of periods, even in practical realizations. In practical realizations mean, that the user expects a search result or a response after some time and "arbitrary" mean "infinite", in the sense that a device would combine forever and would not come back with a result. It may also be the case that higher layer time-out settings limit the maximum available time. The reliability of UE synchronization is limited by design, which means that some limitations may apply already due to 3GPP definition. In the state-of-the-art, the same information is only sent 64 times, then the UE cannot combine more than that, combining is limited by design.

In a next step, the UE has to receive and decode the NB physical broadcast channel (NPBCH). The NPBCH is QPSK modulated and carries narrowband master information block MIB-NB information. The MIB comprises of various cell configuration and some cell time information in the form of a set of bits, meaning it contains 34 bits (figure 1) and is transmitted over 64 frames, see US 2008/0316995 A1. The MIB-NB is split into 8 blocks, where each block is transmitted on the first subframe (SF#0) in a frame and is repeated in the subsequent 7 frames. It also comprises four most significant bits of the system frame number (SFN). The system frame number is considered as the index of a system frame, i.e. part of the logical cell time.

NPBCH is periodically sent by the base station (eNB) in 1 out of 10 subframes per system frame as stated above. NPBCH subframes are repeated 8 times, whereas information bits remain unchanged for 64 consecutive transmissions, hence over 640ms transmission time interval (TTI). Using a limited number of hypotheses, the UE can combine these 8 blocks with 8 individual transmissions each to decode the master information block. Hypotheses are assumptions about the actual cell timing which is not entirely known at this stage. The resulting code-rate is 1/256 ∼ 4^{∗}10⁻³, meaning that 256 channel bits in relation to one information bit are transmitted per transmission. Further combining, i.e. beyond 64 consecutive NPBCH subframes is not foreseen since the SFN bits in MIB change after 64 SFN. US 2012/099663 A1 and US 2008/316995 A1 disclose methods which allow further combining and thereby increase the reliability of NPBCH reception.

Other transmissions between eNodeB and UE, for instance, unicast transmissions, i.e. data transmission dedicated to the individual UE, can be configured with a code-rate of down to 4^{∗}10⁻⁵ which is significantly more reliable than NPBCH reception. Consequently, the performance of the entire system may be limited by NPBCH reception performance.

From the 3GPP standard it is known, that in an NB IoT network, a UE must synchronize to a cell and acquire basic system information before it can attach to that cell. A part of the system acquisition procedure is the reception of the Narrowband physical broadcast channel (NPBCH). The master information block (MIB) as NPBCH payload is 34 bits long and carries, among other configuration parameters, the 4 most significant bits (MSBs) of SFN as the first 4 bits b₀ ... b₃ of MIB.

Per 3GPP 36.212 and 36.211, NPBCH is processed on transmitter side in following steps:
1. Calculation and attachment of 16 bit CRC, resulting in a bit sequence {cᵢ} → {c₀ ... c₄₉} = {b₀ ... b₃₃, crc₀ ... crc₁₅}
2. Convolutional encoding with tail-biting, resulting in a bit sequence {eᵢ} → {e₀... e₁₄₉}
3. Rate matching
4. Scrambling
5. QAM mapping

These steps are explained in more detail.

The "CRC calculation" refers to a procedure where payload bits are fed into a shift register with linear feedback in order to create a checksum which can be used to determine correctness of the received data. This checksum is usually appended to the sequence of payload bits. CRC means cyclic redundancy check.

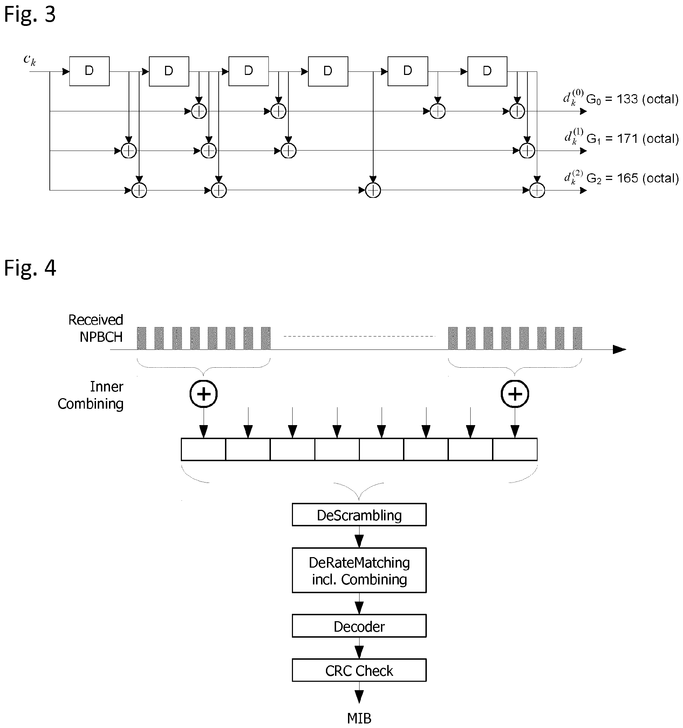

The "Convolutional encoding" refers to encoding of payload data and attached CRC bits according to a linear scheme; this is illustrated in figure 3, respectively. Each D represents a delay of one bit, each ⊕ a xor-operation. Both operations are linear. For encoding of NPBCH and other channels in NB IoT, coding schemes with code-rate 1/3 are used, i.e. each input bit to the encoder creates 3 bits in the output of the encoder. This additional redundancy may be used at receiver side to compensate for channel distortions and errors in the received signal.

The "Rate matching" describes a procedure where the base code rate of the used code (in general 1/3) is adapted to the desired amount of redundancy, i.e. the level of protection of the transmitted signal. Furthermore, rate matching is used to adapt the encoder output bit stream to the number of available resources given by the structure of the transmitted signal in a fine-granular fashion. During the rate matching procedure, individual bits are either repeated or omitted while assembling the output bit stream, to get a higher or lower amount of redundancy, respectively. Furthermore, rate matching in NB IoT involves some interleaving, i.e. exchange of bit positions to improve diversity. All operations are linear. On receiver side, so called de-rate matching involves combination of bits that have been repeatedly transmitted or filling of bit positions that have been omitted in the actual transmission with zero information.

The "Scrambling" describes a procedure where a locally generated pseudo-random bit sequence is applied to an input bit stream by a bit-wise xor-operation. This improves the statistics of the transmitted signal since long sequences of '0' or '1' are avoided. Furthermore, interference from or to other transmission links becomes more noise-like, improving the ability to cope with such interferences during decoding.

Both, transmitter and receiver apply the same pseudo-random sequence, which depends on the chosen hypotheses, the xor operation itself is linear.

In order to allow for reception of NPBCH under extreme conditions (e.g. high attenuation in basements of buildings), various kinds of repetition are performed which a UE may collect and combine to successfully decode the basic cell information conveyed in NPBCH.

The UE receives signals that consist of inner repetitions of exactly the same bit stream and outer repetitions with the same NPBCH payload but different scrambling pattern. In the 3GPP standard the number of inner repetitions is 8. Eight outer repetitions with 8 inner repetitions each yield that the same MIB as payload of NPBCH is repeated 64 times in total, with different rate matching and scrambling pattern on NPBCH every 8th NPBCH subframe.

In practical scenarios, only the beginning of an inner repetition sequence is known in advance. A UE has to test up to 8 different hypotheses to obtain correct position of outer repetitions and a constructive combination of all received repetitions.

State-of-the-art UEs make use of the inner repetitions as well as of the known rate matching and scrambling hypotheses to combine all 64 subframes before decoding. This is exemplary shown in figure 4.

The encoded signals from the transmitter side (usually a base station) have to be received and decoded by a UE, therein that the UE can reliably decide if it can attach to that cell of the base station or not.

It is an object of the invention to improve the existing NPBCH reception procedure in order to achieve a lower code-rate and hence a more reliable transmission between eNodeB and UEs.

The object of the invention will be solved by a method for improving reliability of a broadcast channel (NPBCH) reception in narrowband internet-of-things (NB-IoT) devices (UE) during a cell acquisition phase, whereas the UE receives, descrambles and de-rate-matches at least a first and a second group of 64 NPBCH subframes, whereas using the four most significant bits (b₀...b₃) of the system frame number as a counter, whereas whenever the counter is incremented from an even to an odd number, only the lowest significant bit of the counter b₃ changes from 0 to 1, resulting in only one bit toggle and using a modifier sequence {m}, which is calculated in advance by using the one bit toggle in the SFN bits, which is applied to the first group of 64 NPBCH subframes, before combining the both groups, decoding and extracting the master information block from the combined NPBCH subframes by only linear operations and whereas the UE attaches to the cell if a match is found.

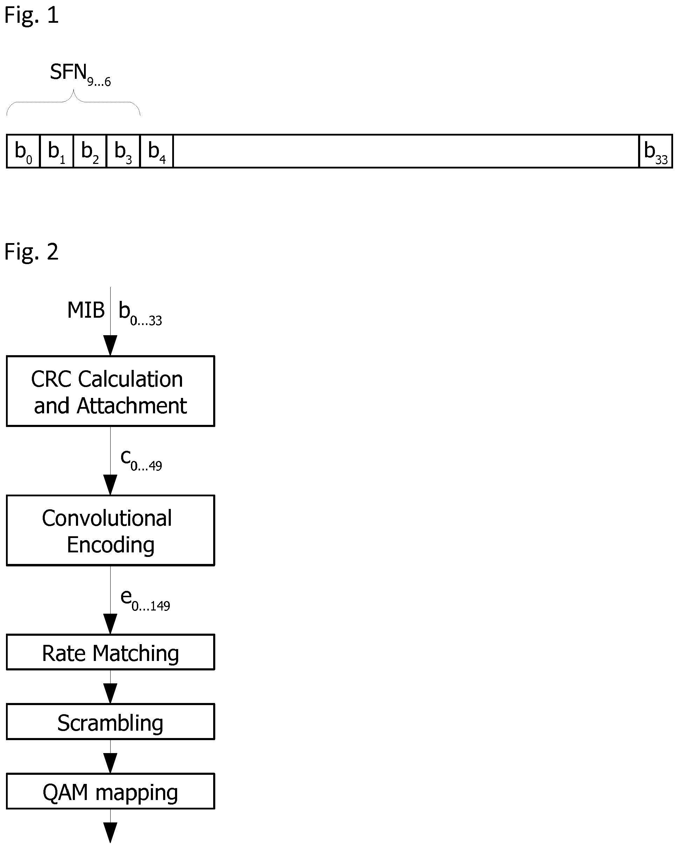

The 4 most significant bits of the system frame number (SFN) conveyed in the master information block (MIB) (see figure 1) can be considered as a counter which gets incremented every 64 NBPCH subframes. Whenever this counter is incremented from an odd to an even number, it is not known which bits will change without knowledge of the actual SFN. However, for all occasions where the counter gets incremented from an even to an odd number, the lowest significant bit (LSB) of the counter changes from 0 to 1. All other transmitted bit remains unchanged.

With the knowledge that the master information block (MIB) as NPBCH payload information is protected by 16 cyclic redundancy check (CRC) bits and since the position of the SFN bits and length of MIB are known, the impact of a single bit toggle on CRC bits is well-determined. From the change of LSB and the corresponding CRC change, the resulting change of the output of convolutional encoder can be determined as well. This is independent of the actual MIB content.

This pattern is translated into a modifier sequence {m} which is applied to one group of 64 NPBCH subframes to enable the constructive combination with the next group of received 64 NPBCH subframes. Thus, 128 consecutive NPBCH receptions can be combined instead of 64.

The advantage of the inventive method is that 128 instead of 64 NPBCH subframes can be collected and constructively combined to obtain cell configuration and timing information during cell acquisition phase. This yields a coverage improvement by 3dB with respect to NPBCH / MIB reception.

The proposed method and hence the combining scheme of fixed bit sequences of encoded information can be used during reception of any kind of broadcast information where cell configuration information remains constant most of the time but the straight-forward combining of sequential transmissions is limited due to inclusion of cell time information in the broadcasted information. Pre-requisite is that a modifier vector exists which be calculated in advance, i.e. without knowledge of the actual information. Examples for such broadcast information are the system information block 1 (SIB1) in NB IoT and the PBCH in LTE standard.

So, more generally, the inventive method can be summarized that a method for improving reliability of encoded broadcasted cell configuration information reception in a communication standard is disclosed, whereas a straight-forward combining of sequential transmissions is limited due to inclusion of cell time information in broadcasted information, the inventive method combines two consecutive blocks of NPBCH where the broadcasted MIBs differ by a single increment in the part of the MIB code word that signals cell timing. In order to constructively combine NPBCH of two consecutive MIBs the inventive method uses a modifier vector which is calculated in advance without knowledge of an actual information by encoding a MIB that contains all zeros but a single one at the position of the least significant bit of the cell timing information in the MIB.

In the inventive method, the MIB code word which has a standardized form of 34 bits (b₀...b₃₃) length, whereas the four most significant bits (b₀...b₃) are defined as four most significant bits of the system frame number used as the counter, whereas whenever the counter gets incremented from an even to an odd number, only the lowest significant bit of the counter b₃ changes from 0 to 1, resulting in only one bit toggle.

This bit toggle is implemented in the modifier sequence {m} as explained above, and hence allows combining 128 NBPCH subframes instead of 64 NBPCH subframes.

With the inventive method it is possible that a device decides itself how many combinations are sufficient. So, the reliability of UE synchronization is not limited by design, in contrast to the state-of-the-art, where the same information is only sent 64 times, then the UE cannot combine more than that, combining is limited by design. Thus, without the invention the UE can decide in the range of 1 to 64 combinations, and with the invention in the range of 1 to 128 combinations. Hence the more combinations are used, the more reliable the synchronization of the UE becomes.

In the inventive method, the modifier sequence {m} is calculated in advance by using the one bit toggle in the SFN bits and whereas {m} is fixed for a certain communication standard.

The sequence {m} should be pre-calculated in advance since calculation during run-time does not give an advantage but causes higher complexity in the actual implementation and higher power consumption.

In an embodiment of the inventive method, the modifier sequence {m} is calculated by performing the following steps:
- feeding the MIB with the bits bᵢ=0 with I = 0 ... 33 except for b₃=1 to a CRC calculation and attachment procedure, and
- performing a convolutional encoding procedure, resulting in a sequence {e},
- mapping the sequence {e} to the modifier sequence {m} according to {m} = (1-2^{∗}eᵢ) with I = 1 ... 33.

In another embodiment of the inventive method, the modifier sequence {m} is determined analytically using equations for encoding which are defined in the corresponding standards. Corresponding standards mean that the determination is performed according to the restrictions and boundary condition of the standard in which the method will be performed.

During reception, immediate combining, descrambling and de-rate-matching is carried out for two independent blocks containing 64 NPBCH each. Then, the de-rate-matched output from the first block is multiplied with sequence {m} and combined with de-rate-matched output. The result is provided to the decoder, CRC check is performed and if successful, information data are passed on the higher layers.

Since it is not known in advance whether the SFN MSBs counter has changed from even to odd or odd to even, it is preferred that the UE receives up to three groups of 64 NPBCH subframes, denoted as G(j) with j=0,1,2 in order to detect the bit toggle in the most significant bits of the system frame number between one of the two groups {G(0), G(1)} or {G(1), G(2)}. As the MSBs of the system frame number is incremented every 64 subframes, one of the pairs {G(0), G(1)} and {G(1), G(2)} will exhibit the desired counter increment from an even to an odd number.

In another embodiment of the inventive method, the decoding of the modified first group of 64 NPBCH subframes is already performed during reception of the first group providing that the one bit toggle has been occurred. The combining across SFN+64 hypothesis is already considered during reception of the first group of 64 NPBCH subframes. Usually, the starting point of the group of 64 NPBCH subframes is not known in advance. A state-of-the-art UE receives 8 sets of 8 NPBCH subframes each and tries to decode the combined signal. If the decoding is not successful, the oldest set is discarded and a new set is received. This sliding window process is repeated until a match is found. Since start of reception is not synchronized with the start of transmission of a set of 8x8 NPBCH subframes, 12 sets must be received on average before a match is found.

A UE implementing the invented method will try up to 8 hypotheses on the first received 8 sets of 8 NPBCH subframes. Provided that counter in NPBCH code word changes from even to odd, one of the 8 trials will be successful. Hence, NPBCH can be successfully decoded already after reception of 8x8 NPBCH subframes which results in less power consumption.

The invention will be explained in more detail using exemplary embodiments.

The appended drawings show
- Fig. 1: The master information block with the four most significant bits as system frame counter;
- Fig. 2: Procedure for processing the NPBCH on transmitter side;
- Fig. 3: Schematical illustration of the convolutional encoding;
- Fig. 4: Combining of 64 subframes of one received group of NBPCH subframes with correct timing hypothesis (state-of-the-art);
- Fig. 5: Inventive method with modifier sequence {m} and decoding of 128 NBCH subframes;
- Fig. 6: Sliding window approach of a) a state-of-the-art UE and b) the extended new method for a blind decoding starts in the middle of a NPBCH transmission period.

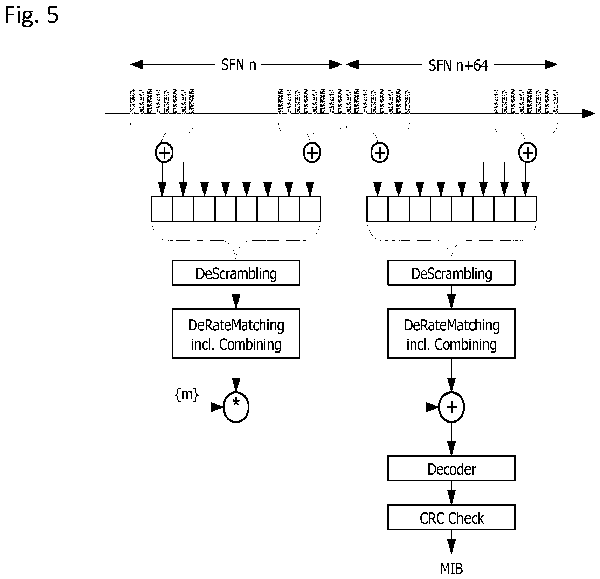

Figure 5 shows the inventive method for improving reliability of a broadcast channel (NPBCH) reception in narrowband internet-of-things (NB-IoT) devices (UE) during a cell acquisition phase. During reception, immediate combining, descrambling and de-rate-matching is carried out for two independent blocks containing 64 NPBCH each. Then, the de-rate-matched output from the first block is multiplied with sequence {m} and combined with de-rate-matched output. The result is provided to the decoder and processed further as usual.

Figure 5 depicts only the case where collection starts at the beginning of a NPBCH repetition period, with SFN mod 64 = 0 in MIB. Here, all received information can be constructively combined. Hence, the number of NPBCH transmissions which can be combined before decoding is increased by a factor of 2, i.e. from 64 to 128. This provides a theoretical performance gain of 3dB or increase of cell reach by a factor of sqrt(2).

For practical scenarios where the exact timing of a NPBCH period is not known, worst case 15^{∗}8 additional NPBCH subframes must be received before the maximum number of constructive combinations is reached.

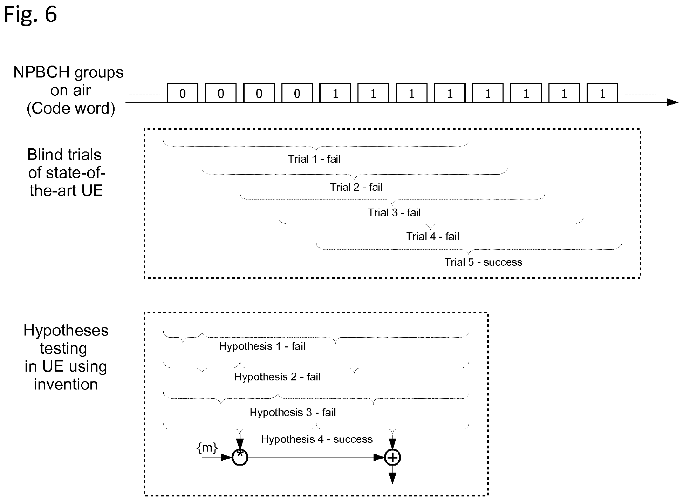

The combining across SFN+64 hypothesis is already considered during reception of the first group of 64 NPBCH subframes. Usually, the starting point of the group of 64 NPBCH subframes is not known in advance. A state-of-the-art UE receives 8 sets of 8 NPBCH subframes each and tries to decode the combined signal (figure 6a). If the decoding is not successful, the oldest set is discarded and a new set is received. This sliding window process is repeated until a match is found. Since start of reception is not synchronized with the start of transmission of a set of 8x8 NPBCH subframes, 12 sets must be received on average before a match is found.

A UE implementing the invented scheme (figure 6b) will try up to 8 hypotheses on the first received 8 sets of 8 NPBCH subframes. Provided that counter in NPBCH code word changes from even to odd, one of the 8 trials will be successful. Hence, NPBCH can be successfully decoded already after reception of 8x8 NPBCH subframes which results in less power consumption. In figure 6 the sliding window approach of a state-of-the-art UE (figure 6a) and the extended new scheme (figure 6b) is illustrated for an example where blind decoding starts in the middle of a NPBCH transmission period.

## Claims

1. A method for improving reliability of a broadcast channel, NPBCH, reception in narrowband internet-of-things, NB-IoT, devices UE during a cell acquisition phase, wherein the UE receives one group of 64 encoded NPBCH subframes in order to attach itself to the cell,
wherein the one group of 64 NPBCH subframes comprises a master information block, MIB, comprising cell configuration and cell time information and which has a standardized form of 34 bits (b₀...b₃₃) length and four most significant bits of a system frame number, and
wherein the four most significant bits of the system frame number are incremented every 64 NPBCH subframes while the rest of the MIB remains unchanged, the method is **characterized in that** the UE receives, descrambles and de-rate-matches at least a first and a second group of 64 NPBCH subframes, wherein using the four most significant bits (b₀...b₃) of the system frame number as a counter, wherein whenever the counter gets incremented from an even to an odd number, only the lowest significant bit of the counter b₃ changes from 0 to 1, resulting in only one bit toggle and using a modifier sequence {m}, which is calculated in advance by using the one bit toggle in the SFN bits, which is applied to the first group of 64 NPBCH subframes, before combining the both groups, decoding and extracting the MIB from the combined NPBCH subframes by only linear operations and wherein the UE attaches to the cell if a match is found.

2. The method for improving reliability of NPBCH reception according to claim 1, **wherein** the modifier sequence {m} is fixed for a certain communication standard.

3. The method for improving reliability of NPBCH reception according to one of the former claims, **wherein** the modifier sequence {m} is calculated by performing the following steps:
- feeding the MIB with the bits bᵢ=0 with i=0...33 except for b₃=1 to a CRC calculation and attachment procedure, and
- performing a convolutional encoding procedure, resulting in a sequence {e},
- mapping the sequence {e} to the modifier sequence {m} according to {m} = (1-2^{∗}eᵢ) with i=1...33.

4. The method for improving reliability of NPBCH reception according to one of the claims 1 to 2, **wherein** the modifier sequence {m} is determined analytically using equations for encoding which are defined in the corresponding standard.

5. The method for improving reliability of NPBCH reception according to one of the former claims, **wherein** the UE receives up to three groups of 64 NPBCH subframes, denoted as G(j) with j=0,1,2 in order to detect the bit toggle in the most significant bits of the system frame number between one of the two groups {G(0), G(1)} or {G(1), G(2)}.

6. The method for improving reliability of NPBCH reception according to one of the former claims, **wherein** the decoding of the modified first group of 64 NPBCH subframes is already performed during reception of the first group providing that the one bit toggle has occurred.

## Patentansprüche

1. Verfahren zum Verbessern der Zuverlässigkeit eines Broadcastkanal(NPBCH)-Empfangs in Schmalband-Internetder-Dinge(NB-IoT)-Vorrichtungen UE während einer Zellerfassungsphase,
wobei die UE eine Gruppe von 64 codierten NPBCH-Unterrahmen empfängt, um sich an die Zelle anzubinden, wobei die eine Gruppe von 64 NPBCH-Unterrahmen einen Masterinformationsblock, MIB, umfasst, der Zellauslegungs- und Zellzeitinformationen umfasst und der eine standardisierte Form von einer Länge von 34 Bits (b₀...b₃₃) und vier höchstwertigen Bits einer Systemrahmennummer aufweist, und
wobei die vier höchstwertigen Bits der Systemrahmennummer alle 64 NPBCH-Unterrahmen erhöht werden, während der Rest des MIB unverändert bleibt, das Verfahren **dadurch gekennzeichnet ist, dass** die UE mindestens eine erste und eine zweite Gruppe der 64 NPBCH-Unterrahmen empfängt, descrambelt und deren Ratenanpassung aufhebt,
wobei der vier höchstwertigen Bits (b₀...b₃) der Systemrahmennummer als einen Zähler verwendet werden, wobei, immer wenn der Zähler von einer geraden auf eine ungerade Zahl erhöht wird, sich nur das niedrigstwertige Bit des Zählers b₃ von 0 in 1 ändert, was nur in einer Bitumschaltung und in der Verwendung einer Modifikatorsequenz {m} resultiert, die vorab unter Verwendung der Bitumschaltung in den SFN-Bits berechnet wird, die auf die erste Gruppe von 64 NPBCH-Unterrahmen angewendet wird, bevor beide Gruppen kombiniert werden, wobei der MIB nur durch lineare Operationen decodiert und aus den kombinierten NPBCH-Unterrahmen extrahiert wird, und
wobei sich die UE an die Zelle anbindet, wenn eine Übereinstimmung gefunden wird.

2. Verfahren zum Verbessern der Zuverlässigkeit des NPBCH-Empfangs nach Anspruch 1, **wobei** die Modifikatorsequenz {m} für einen bestimmten Kommunikationsstandard fest ist.

3. Verfahren zum Verbessern der Zuverlässigkeit des NPBCH-Empfangs nach einem der vorhergehenden Ansprüche, **wobei** die Modifikatorsequenz {m} durch Durchführen der folgenden Schritte berechnet wird:
- Eingeben des MIB mit den Bits bᵢ=0, wo i=0...33, außer b₃=1, in eine CRC-Berechnungs- und - Anbindungsprozedur und
- Durchführen einer Faltungscodierungsprozedur, die in einer Sequenz {e} resultiert,
- Zuordnen der Sequenz {e} zur Modifikatorsequenz {m} gemäß {m} = (1-2^{∗}eᵢ), wo i=1...33.

4. Verfahren zum Verbessern der Zuverlässigkeit des NPBCH-Empfangs nach einem der Ansprüche 1 bis 2, **wobei** die Modifikatorsequenz {m} unter Verwendung von Gleichungen zum Codieren, die im entsprechenden Standard definiert sind, analytisch bestimmt wird.

5. Verfahren zum Verbessern der Zuverlässigkeit des NPBCH-Empfangs nach einem der vorhergehenden Ansprüche, **wobei** die UE bis zu drei Gruppen von 64 NPBCH-Unterrahmen empfängt, die als G(j), wo j=0,1,2, bezeichnet sind, um die Bitumschaltung bei den höchstwertigen Bits der Systemrahmennummer zwischen einer der zwei Gruppen {G(0), G(1)} oder {G(1), G(2)} zu detektieren.

6. Verfahren zum Verbessern der Zuverlässigkeit des NPBCH-Empfangs nach einem der vorhergehenden Ansprüche, **wobei** das Decodieren der modifizierten ersten Gruppe von 64 NPBCH-Unterrahmen bereits während des Empfangs der ersten Gruppe durchgeführt wird, sofern die eine Bitumschaltung aufgetreten ist.

## Revendications

1. Procédé d'amélioration de la fiabilité d'une réception sur canal de diffusion (NPBCH) dans des dispositifs (UE) de l'Internet des objets à bande étroite (NB-IoT) pendant une phase d'acquisition de cellule,
l'UE recevant un groupe de 64 sous-trames NPBCH codées afin de se connecter lui-même à la cellule,
le groupe de 64 sous-trames NPBCH comprenant un bloc d'informations maître (MIB) comprenant une information de configuration de cellule et de temps de cellule et ayant une forme normalisée de 34 bits (b₀, ..., b₃₃) de long et quatre bits de poids fort d'un numéro de trame de système, et
les quatre bits de poids fort du numéro de trame de système étant incrémentés toutes les 64 sous-trames NPBCH tandis que le reste du MIB reste inchangé,
le procédé étant **caractérisé en ce que** l'UE reçoit et désembrouille au moins un premier et un second groupe de 64 sous-trames NPBCH et annule la mise en concordance de leurs débits,
les quatre bits de poids fort (b₀, ..., b₃) du numéro de trame de système étant utilisés comme compteur,
dès que le compteur est incrémenté d'un nombre pair à un nombre impair, seul le bit de poids faible du compteur b₃ changeant de 0 à 1, résultant en un seul basculement de bit et utilisant une séquence modificatrice {m} qui est calculée à l'avance au moyen du seul basculement de bit parmi les bits SFN et qui est appliquée au premier groupe de 64 sous-trames NPBCH avant de combiner les deux groupes et de décoder et d'extraire le MIB des sous-trames NPBCH combinées au moyen d'opérations linéaires uniquement, l'UE se connectant à la cellule si une concordance est trouvée.

2. Procédé d'amélioration de la fiabilité d'une réception NPBCH selon la revendication 1, dans lequel la séquence modificatrice {m} est fixe pour une certaine norme de communication.

3. Procédé d'amélioration de la fiabilité d'une réception NPBCH selon l'une des revendications précédentes, dans lequel la séquence modificatrice {m} est calculée en réalisant les étapes suivantes consistant à :
alimenter le MIB avec les bits bᵢ=0, où i=0, ..., 33, sauf pour b₃=1, selon une procédure de calcul CRC et de connexion, et
réaliser une procédure de codage convolutionnel résultant en une séquence {e},
faire concorder la séquence {e} avec la séquence modificatrice {m} selon {m}=(1-2^{∗}eᵢ) avec i=1, ..., 33.

4. Procédé d'amélioration de la fiabilité d'une réception NPBCH selon l'une des revendications 1 et 2, dans lequel la séquence modificatrice {m} est déterminée analytiquement au moyen d'équations de codage qui sont définies dans la norme correspondante.

5. Procédé d'amélioration de la fiabilité d'une réception NPBCH selon l'une des revendications précédentes, dans lequel l'UE reçoit jusqu'à trois groupes de 64 sous-trames NPBCH, désignées G(j) avec j=0, 1, 2 afin de détecter le basculement de bit parmi les bits de poids fort du numéro de trame de système entre un des deux groupes {G(0), G(1)} ou {G(1), G(2)}.

6. Procédé d'amélioration de la fiabilité d'une réception NPBCH selon l'une des revendications précédentes, dans lequel le décodage du premier groupe modifié de 64 sous-trames NPBCH est déjà réalisé pendant la réception du premier groupe à condition que le seul basculement de bit se soit produit.
